# EUROPÄISCHE PATENTSCHRIFT

(11) **EP 2 689 596 B1**
(45) Veröffentlichungstag und Bekanntmachung des Hinweises auf die Patenterteilung: **14.07.2021**
(21) Anmeldenummer: 12716270.9
(22) Anmeldetag: 22.03.2012
(51) Int. Cl.: H04W 4/16, H04M 3/54, H04W 4/12, H04W 8/02, H04W 12/06, H04W 88/16, H04W 4/60

(54) **VERFAHREN UND VORRICHTUNGEN ZUM LEITEN VON TELEKOMMUNIKATIONSVERBINDUNGEN (TK-VERBINDUNGEN) ZU EINEM MOBILFUNK-ENDGERÄT**
METHOD AND APPARATUSES FOR ROUTING TELECOMMUNICATION CONNECTIONS (TC CONNECTIONS) TO A MOBILE RADIO TERMINAL
PROCÉDÉ ET APPAREILS POUR ACHEMINER DES LIAISONS DE TÉLÉCOMMUNICATION (LIAISONS TC) JUSQU'À UN TERMINAL DE TÉLÉPHONIE MOBILE

(30) Priorität: 23.03.2011 DE 102011005972
(43) Veröffentlichungstag der Anmeldung: 29.01.2014
(73) Patentinhaber: Sigram Schindler Beteiligungsgesellschaft mbH, 14109 Berlin (DE)
(72) Erfinder: PAETSCH, Frank, 12357 Berlin (DE); BERNDT, Heiner, 13089 Berlin (DE)
(86) Internationale Anmeldenummer: PCT/EP2012/055094
(87) Internationale Veröffentlichungsnummer: WO 2012/126991

(56) Entgegenhaltungen:
- WO-A1-2006/094564
- US-A1- 2007 076 760
- MOULY M ET AL: "COMMUNICATION MANAGEMENT", 1. Januar 1993 (1993-01-01), GSM SYSTEM FOR MOBILE COMMUNICATIONS, LASSAY-LES-CHATEAUX, EUROPE MEDIA, FR, PAGE(S) 500 - 565, XP000860008, Absätze [0008] - [8.1.1.3], [8.1.5]; Abbildung 8.16
- None

## Beschreibung

Die Erfindung betrifft ein Verfahren zum Leiten von Telekommunikationsverbindungen (TK-Verbindungen) zu einem Mobilfunk-Endgerät. Sie betrifft des Weiteren ein Mobilfunk-Gateway und ein Mobilfunk-Endgerät, die geeignet sind, an der Durchführung des Verfahrens mitzuwirken.

### Hintergrund der Erfindung

Es ist bekannt, dass ein Mobilfunk-Endgerät im Falle des Aufenthaltes des Nutzers des Mobilfunk-Endgerätes in einem ausländischen Staat über ein internationales Roaming seine Konnektivität aufrecht erhält und dementsprechend in einem fremden Mobilfunknetz des anderen Staates selbsttätig Anrufe empfangen oder tätigen kann. Gleichzeitig verhält es sich so, dass Mobilfunkanbieter für ein internationales Roaming hohe Durchleitungsgebühren verlangen, so dass das Nutzen eines Roaming im Ausland mit erheblichen Kosten verbunden ist. Die gleiche Problematik stellt sich - wenn auch in der Regel mit geringeren Kostenfolgen - bei jeder Nutzung eines Mobilfunknetzes, das nicht das Heimatnetz eines betrachteten Mobilfunk-Endgerätes ist.

Es sind des Weiteren sogenannte Mobilfunk-Gateways bekannt, die eine Schnittstelle zwischen einem oder mehreren Telekommunikations-Mobilfunknetzen und beliebigen anderen Netzen, beispielsweise einem Telekommunikations-Festnetz oder einem IP-Netz bereitstellen. Ein Mobilfunk-Gateway wird von dem Nutzer eines anderen Netzes angerufen und leitet die gewünschte Verbindung über einen Mobilfunkkanal in das Mobilfunknetz weiter, in dem sich der gerufene Teilnehmer befindet. Hierzu implementiert das Mobilfunk-Gateway die Funktionalität eines Mobilfunktelefons und ruft gewissermaßen als Mobilfunktelefon den gerufenen Teilnehmer an. Mobilfunk-Gateways verfügen somit über die gleichen Mobilfunkmodule, wie sie in Mobilfunk-Endgeräten (Handys) zum Einsatz kommen. Derartige Mobilfunk-Gateways sind beispielsweise aus der DE 103 14 144 A1 bekannt.

Dabei ist vorgesehen, dass ein Mobilfunk-Gateway eine Vielzahl von SIM-Karten für die verwalteten Mobilfunkkanäle enthält. Es können beliebige SIM-Karten verschiedener Netzbetreiber eingesetzt werden. Eine SIM-Karte ist eine Einsteckkarte mit einer Kennung (IMSI = International Mobile Subscriber Identity), die einen Netzteilnehmer eindeutig identifiziert und über die ein Mobilfunkgerät einem bestimmten Netzbetreiber zugeordnet wird und eine bestimmte Rufnummer erhält. Darüber hinaus weist eine SIM-Karte eine PIN-Nummer (PIN - Personal Identity Number), sicherheitsrelevante Daten wie Kommunikationsschlüssel und Sicherheitsalgorithmen, nutzerspezifische Daten wie Kurzwahlnummern sowie netzspezifische Daten wie die Kennung des aktuellen Aufenthaltsbereiches auf. Eine SIM-Karte personalisiert ein Mobilfunk-Endgerät hinsichtlich des Nutzers und hinsichtlich des Netzbetreibers und ermöglicht die Abrechnung von Gesprächsgebühren von dem Netzbetreiber.

Weiter sind sogenannte SIM-Server bekannt. In einem SIM-Server werden SIM-Karten für die Mobilfunkkommunikation an einem zentralen Ort bzw. einem zentralen Computer bereitgestellt. Je nach Anforderung und Bedarf wird eine SIM-Karte seitens eines Mobilfunk-Gateways von dem zentralen Computer angefordert und von diesem dem Mobilfunk-Gateway bereitgestellt. Dieses Bereitstellen der SIM-Karte für die Mobilfunkkommunikation erfolgt nicht physisch. Es werden lediglich die Informationen, die eine SIM-Karte identifizieren und deren Funktionalität widerspiegeln, per Datenfernübertragung an das Mobilfunk-Gateway übertragen. Die SIM-Karte befindet sich somit gewissermaßen virtuell auf einem zentralen Computer und ihre Funktionalität wird bei Bedarf auf dem Mobilfunk-Gateway auf der Grundlage spezifischer Informationen und Daten, die vom zentralen Computer übertragen werden, emuliert. Dies ermöglicht die Verwendung eines zentralen SIM-Karten-Pools für ein oder mehrere Mobilfunk-Gateways. Derartige SIM-Server sind beispielsweise in der DE 103 11 980 A1 beschrieben.

Die US 2007/076760 A1 beschreibt ein Verfahren und ein Netzwerk zum Erfassen von Geräteinformationen mobiler Endgeräte. Dabei ist vorgesehen, dass nach einem Wechsel einer SIM-Karte dieses im mobilen Endgerät erkannt und Daten, die die neue SIM-Karte identifizieren, an einen SIM-Switch-Detector (SSD) eines zentralen Systems übertragen werden zwecks Abspeichern der neuen SIM-Informationen in einer Datenbank.

Der vorliegenden Erfindung liegt die Aufgabe zu Grunde, ein Verfahren zum Leiten von Telekommunikationsverbindungen (TK-Verbindungen) zu einem Mobilfunk-Endgerät bereitzustellen, das die mit einem konventionellen Roaming verbundenen Kosten reduziert und trotzdem die Konnektivität des Mobilfunk-Endgerätes gewährleistet. Der vorliegenden Erfindung liegt des Weiteren die Aufgabe zugrunde, ein Mobilfunk-Gateway und Mobilfunk-Endgerät bereitzustellen, die in einem solchen Verfahren einsetzbar sind.

### Zusammenfassung der Erfindung

Diese Aufgabe wird erfindungsgemäß durch ein Verfahren mit den Merkmalen des Anspruchs 1, ein Mobilfunk-Gateway mit den Merkmalen des Anspruchs 12 und ein Mobilfunk-Endgerät mit den Merkmalen des Anspruchs 15 gelöst. Ausgestaltungen der Erfindung sind in den Unteransprüchen angegeben.

Das erfindungsgemäße Verfahren geht von der Situation aus, dass sich ein Mobilfunk-Endgerät im Empfangsbereich eines aktuellen Mobilfunknetzwerkes befindet, das ungleich einem Heimatnetzwerk des Mobilfunk-Endgeräts ist. Beispielsweise befindet sich das Mobilfunk-Endgerät bezogen auf den Staat, in dem sich sein Heimatnetzwerk befindet, in einem ausländischen Staat. Das aktuelle Mobilfunknetzwerk kann jedoch auch ein beliebiges anderes Mobilfunknetzwerk des gleichen Staates sein. Das Mobilfunk-Endgerät weist eine erste, dem Heimatnetzwerk zugeordnete SIM-Karte auf, der eine erste Rufnummer zugeordnet ist.

Erfindungsgemäß wird in einem ersten Schritt die erste SIM-Karte des Mobilfunk-Endgerätes durch eine dem aktuellen Mobilfunknetz zugeordnete, zweite SIM-Karte, der eine zweite Rufnummer zugeordnet ist, ersetzt. Das Ersetzen ist in der Regel ein physisches Ersetzen der ersten SIM-Karte durch die zweite SIM-Karte durch den Nutzer des Mobilfunk-Endgerätes. Sofern das Mobilfunk-Endgerät derart ausgebildet ist, dass es gleichzeitig mehrere SIM-Karten enthalten kann, kann das Ersetzen der ersten SIM-Karte durch die zweite SIM-Karte auch darin liegen, dass die erste SIM-Karte deaktiviert und die zweite SIM-Karte aktiviert wird.

In einem zweiten Schritt wird, ausgelöst durch den Ersatz der SIM-Karte, automatisch im Mobilfunk-Endgerät eine Nachricht erzeugt, die zumindest folgende Informationen aufweist: Zum einen die der zweiten SIM-Karte zugeordnete zweite Rufnummer, und zum anderen mindestens eine Information, die die ersetzte SIM-Karte identifiziert. Bei dieser Information kann es sich beispielsweise um die der ersetzten SIM-Karte zugeordnete erste Rufnummer und/oder mindestens eine Identifizierungsinformation betreffend die ersetzte SIM-Karte handeln. Die mindestens eine Information, die die ersetzte SIM-Karte identifiziert, kann jedoch auch eine andere Information sein, beispielsweise ein privat vereinbarter Code oder eine bestimmte Identifikationsnummer, die der ersten, ersetzten SIM-Karte zugeordnet wurde.

Dieses automatische Erzeugen einer Nachricht erfolgt beispielsweise durch eine Softwareapplikation, die auf dem Mobilfunk-Endgerät implementiert ist. Die Nachricht wird automatisch in dem Sinne erzeugt, dass die Softwareapplikation die in der Nachricht enthaltenen Informationen selbständig zusammenstellt und in eine Nachricht einbettet. Dabei kann allerdings vorgesehen sein, dass die Applikation den Nutzer des Mobilfunk-Endgerätes fragt, ob er die automatische Erzeugung einer entsprechenden Nachricht wünscht, und der Nutzer dies bestätigen muss.

In einem weiteren Schritt wird die erzeugte Nachricht automatisch von dem Mobilfunk-Endgerät an ein Mobilfunk-Gateway gesandt, wobei das Mobilfunk-Gateway mit dem Heimatnetzwerk, das heißt dem Netzwerk der ersten SIM-Karte direkt oder über ein weiteres Netzwerk verbunden ist. Das Versenden der Nachricht an das Mobilfunk-Gateway erfolgt automatisch. In einer Ausführungsvariante wird die Nachricht dabei als SMS-Nachricht an das Mobilfunk-Gateway gesandt. Über die Absenderinformation der SMS-Nachricht wird dabei automatisch die neue, der zweiten SIM-Karte zugeordnete Rufnummer bereitgestellt.

Das erfindungsgemäße Verfahren sieht weiter vor, dass nunmehr jede an die erste Rufnummer gerichtete TK-Verbindung an das Mobilfunk-Gateway geleitet wird. Dies kann beispielsweise dadurch erreicht werden, dass eine Partner-SIM-Karte der ersten SIM-Karte vom Mobilfunk-Gateway nach Erhalt der Nachricht im Heimatnetzwerk der ersten SIM-Karte eingebucht wird. Jedoch bestehen auch andere Möglichkeiten, die erreichen, dass an die erste Rufnummer der ersten SIM-Karte (also an die Standard-Rufnummer des Mobilfunk-Teilnehmers) gerichtete TK-Verbindungen an das Mobilfunk-Gateway geleitet werden.

Das Mobilfunk-Gateway ordnet nun eine solche TK-Verbindung anhand der in der Nachricht enthaltenen Informationen der zweiten SIM-Karte und/oder der der zweiten SIM-Karte zugeordneten zweiten Rufnummer zu. Aufgrund der erhaltenen Nachricht ist das Mobilfunk-Gateway darüber in Kenntnis gesetzt, welche aktuelle, temporäre Rufnummer das Mobilfunk-Gateway im aktuellen Mobilfunknetz besitzt und kann die an die erste Rufnummer gerichtete TK-Verbindung dieser aktuellen zweiten Rufnummer bzw. der zweiten SIM-Karte zuordnen.

Dementsprechend wird nun eine solche TK-Verbindung vom Mobilfunk-Gateway über mindestens ein Kommunikationsnetz an das mit der zweiten SIM-Karte versehene Mobilfunk-Endgerät unter Verwendung der in der Nachricht enthaltenen zweiten Rufnummer weitergeleitet.

Das Kommunikationsnetz, über das die TK-Verbindung vom Mobilfunk-Gateway weitergeleitet wird, umfasst dabei in der Regel kein Mobilfunknetz (abgesehen von dem zielseitigen aktuellen Mobilfunknetz, in das das Mobilfunk-Endgerät mit seiner zweiten SIM-Karte eingebucht ist). Vielmehr wird ein kostengünstiges Netzwerk verwendet, über das die Verbindung bis zum aktuellen Mobilfunknetz, in dem die zweite SIM-Karte eingebucht ist, weitergeleitet wird. Ein erstes Ausführungsbeispiel für ein solches Kommunikationsnetz ist das internationale Festnetz (TDM-Netz), über das Telekommunikationsinformationen wesentlich kostengünstiger übertragen werden können als über ein Roaming zwischen Mobilfunknetzen. Bei einem weiteren Ausführungsbeispiel ist das Kommunikationsnetz, über das eine TK-Verbindung vom Mobilfunk-Gateway an das aktuelle Mobilfunknetz geleitet wird, ein IP-Netz wie z.B. das Internet.

Das erfindungsgemäße Verfahren umgeht somit mithilfe von Standard Mobilfunk-Funktionen, lokalen SIM-Karten und dem Einsatz eines Mobilfunk-Gateways ein konventionelles Roaming und realisiert hierdurch ein erhebliches Kostenersparnispotenzial. Ein Mobilfunknutzer, der eine günstigere lokale SIM-Karte z.B. bei einem Auslandsaufenthalt verwendet, kann mithilfe des erfindungsgemäßen Verfahrens trotzdem komfortabel und preiswert mit Nutzern des heimischen Mobilfunknetzes kommunizieren. Dabei werden keine weiteren Geräte außer dem normalen Mobilfunk-Endgerät des Nutzers im aktuellen Mobilfunknetz verwendet und der Nutzer ist unabhängig von sämtlichen Internetverbindungen. Alle an- und abgehenden Gespräche funktionieren wie gewohnt, wobei die mit einem traditionellen Roaming verbundenen Kosten aber umgangen werden.

Auch benötigt der Mobilfunknutzer zur Realisierung des erfindungsgemäßen Verfahrens weder WLAN-Hotspots, mobile Internetverbindungen oder eine entsprechende VolP-Lösung, bei denen zum Teil ebenfalls erhebliche Kosten entstehen können. Trotzdem bleibt die Erreichbarkeit unter der bekannten Mobilfunknummer weiter erhalten.

Es wird darauf hingewiesen, dass der Begriff "SIM-Karte" im Sinne der vorliegenden Erfindung jede Einsteckkarte bezeichnet, die einen Netzteilnehmer eindeutig identifiziert, so dass ein Mobilfunkgerät mit einer solchen Einsteckkarte einem bestimmten Netzbetreiber zugeordnet werden und eine bestimmte Rufnummer erhalten kann. Der Begriff "SIM-Karte" bezeichnet somit nicht nur Einsteckkarten zur Identifikation eines Netzteilnehmers im GSM Standard, sondern auch Einsteckkarten zur Identifikation eines Netzteilnehmers beliebiger anderer derzeitiger oder künftiger Mobilfunkstandards.

Wie bereits erwähnt, befindet sich in einer Ausführungsvariante der Erfindung das Mobilfunk-Endgerät initial bezogen auf den Staat, in dem sich sein Heimatnetzwerk befindet, in einem ausländischen Staat. Dabei ist das aktuelle Mobilfunknetz ein ausländisches Mobilfunknetz und wird die erste SIM-Karte durch eine dem ausländischen Mobilfunknetz zugeordnete, zweite SIM-Karte ersetzt wird.

In einer Ausgestaltung der Erfindung ist vorgesehen, dass eine an die erste Rufnummer gerichtete TK-Verbindung, das heißt eine aus oder über das Heimatnetzwerk des Mobilfunk-Endgerätes an dieses gerichtete TK-Verbindung, zunächst an das Mobilfunk-Gateway geleitet wird, indem bei Erhalt der Nachricht das Mobilfunk-Endgerät mittels einer SIM-Karte des Mobilfunk-Gateways am Ort des Mobilfunk-Gateways im Heimatnetzwerk eingebucht wird. Aus Sicht des Anrufers und des Heimatnetzwerkes befindet sich das betrachtete Mobilfunk-Endgerät nun am Ort des Mobilfunk-Gateways und werden sämtliche Rufe zu oder von der entsprechenden SIM-Karte des Mobilfunk-Gateways geleitet.

Hierzu ist in einer Ausführungsvariante vorgesehen, dass das Einbuchen des Mobilfunk-Endgerätes im Heimatnetzwerk unter Verwendung einer Partner-SIM-Karte der ersetzten SIM-Karte erfolgt. Die Partner-SIM-Karte befindet sich dabei in einer Ausgestaltung bereits im Mobilfunk-Gateway und wird spätestens dann aktiviert, wenn das Mobilfunk-Gateway die Nachricht vom Mobilfunk-Endgerät hinsichtlich des Ersatzes der SIM-Karte im Endgerät erhält. Über die mindestens eine übersandte Information, die die ersetzte SIM-Karte identifiziert, kann dabei die Partner-SIM-Karte zugeordnet werden.

Alternativ kann vorgesehen sein, dass die Partner-SIM-Karte in einem SIM-Server angeordnet ist und lediglich die für eine Authentifizierung im Heimatnetzwerk relevanten Daten an das Mobilfunk-Gateway übertragen werden und dort die SIM-Karte emuliert wird. Die Übertragung der für eine Authentifizierung im Heimatnetzwerk relevanten Daten an das Mobilfunk-Gateway erfolgt dann, wenn die im Mobilfunk-Endgerät erzeugte Nachricht beim Mobilfunk-Gateway und/oder beim SIM-Server eingeht. Dabei kann vorgesehen sein, dass die Nachricht zunächst beim Mobilfunk-Gateway eingeht und dieses dann den SIM-Server über den Eingang der Nachricht informiert, worauf die für eine Authentifizierung im Heimatnetzwerk relevanten Daten vom SIM-Server an das Mobilfunk-Gateway übersandt werden. Ebenfalls kann vorgesehen sein, dass die automatisch im Mobilfunk-Endgerät erzeugte Nachricht über den SIM-Server an das Mobilfunk-Gateway übersandt wird und somit zuerst beim SIM-Server vorliegt, worauf der SIM-Server die für eine Authentifizierung im Heimatnetzwerk relevanten Daten an das Mobilfunk-Gateway übersendet.

Partner-SIM-Karten sind an sich bekannt. Es handelt sich um eine SIM-Karte, der die gleiche Rufnummer wie der eigentlichen SIM-Karte zugeordnet ist, die jedoch eine andere IMSI besitzt. Die Partner-SIM-Karte muss dabei schon beantragt und vorhanden sein, bevor das Verfahren durchgeführt wird.

In einer alternativen Ausführungsvariante wird eine an die erste Rufnummer gerichtete TK-Verbindung dadurch an das Mobilfunk-Gateway geleitet, dass das Mobilfunk-Endgerät vor dem Austausch der SIM-Karte eine ständige Rufweiterleitung an das Mobilfunk-Gateway einstellt. Eine solche ständige Rufweiterleitung kann automatisch oder manuell eingestellt werden, bevor die SIM-Karte ausgetauscht wird. Dabei ist zu beachten, dass eine ständige Rufweiterleitung gemäß den geltenden Standards nicht von einem Roaming betroffen ist, insbesondere im Falle einer ständigen Rufweiterleitung keine mit einem Roaming verbundenen Kosten entstehen.

Durch die eingestellte ständige Rufweiterleitung werden an die erste Rufnummer gerichtete TK-Verbindungen automatisch an das erste Mobilfunk-Gateway geleitet. Dabei kann vorgesehen sein, dass eine an die erste Rufnummer gerichtete TK-Verbindung an eine bestimmte, in dem Mobilfunk-Gateway enthaltene oder diesem durch einen SIM-Server bereitgestellte SIM-Karte geleitet wird. Ebenso kann vorgesehen sein, dass eine Rufweiterleitung an eine SIM-Karte erfolgt, die über einen SIM-Server flexibel zugeordnet wird. Im letzteren Fall kann diesbezüglich auf einen Pool von SIM-Karten in einem SIM-Server zugegriffen werden.

In einer Ausführungsvariante der vorliegenden Erfindung enthält die im Mobilfunk-Endgerät bei Ersetzen der SIM-Karte automatisch erzeugte Nachricht zumindest die zweite, der zweiten SIM-Karte zugeordnete Rufnummer und die IMSI der ersten, ersetzten SIM-karte. Die zweite, der zweiten SIM-Karte zugeordnete Rufnummer ist notwendigerweise in der Nachricht enthalten, da diese die temporäre Rufnummer des Mobilfunk-Endgerätes darstellt, an die an das Mobilfunk-Gateway geleiteten TK-Verbindungen weitergeleitet werden sollen. Über die IMSI kann das Mobilfunk-Gateway feststellen, um welchen Netzteilnehmer es sich handelt. Auch ist die IMSI für Abrechnungszwecke von Bedeutung. Über die IMSI kann das Mobilfunk-Gateway sich des weiteren, sofern erforderlich, auch die erste, Standard-Rufnummer des Mobilfunk-Endgerätes beschaffen.

Alternativ ist statt der IMSI die erste Rufnummer zusammen mit der zweiten Rufnummer in der Nachricht enthalten. In einer weiteren Variante sind beide Rufnummern und die IMSI in der Nachricht erhalten. Jedoch kann eine Identifikation der ersten SIM-Karte auch in anderer Weise erfolgen, beispielsweise über eine vereinbarte Identifikationsnummer.

Bei der zweiten SIM-Karte handelt es sich beispielsweise um eine prepaid SIM-Karte. Eine solche kann in besonders einfacher Weise im Ausland beschaffen und in dem Mobilfunk-Endgerät eingesetzt werden. Grundsätzlich kann es sich bei der zweiten SIM-Karte jedoch auch um eine über einen Vertrag mit einem ausländischen Mobilfunkbetreiber erhaltene SIM-Karte handeln.

Die im Mobilfunk-Endgerät erzeugte Nachricht kann direkt oder über einen SIM-Server an das Mobilfunk-Gateway übersandt werden. Dabei kann vorgesehen sein, dass sämtliche oder zumindest die für das vorliegende Verfahren relevanten Funktionen des Mobilfunk-Gateways über einen SIM-Server kontrolliert werden.

Das erfindungsgemäße Verfahren betrachtet als TK-Verbindungen sowohl Telefongespräche als auch SMS-Nachrichten. Ebenso wie ankommende Gespräche können auch ankommende SMS-Nachrichten gemäß dem erfindungsgemäßen Verfahren kostengünstig weitergeleitet werden. Auch ermöglicht das erfindungsgemäße Verfahren in entsprechender Weise, vom Mobilfunk-Endgerät abgehende Gespräche in kostengünstiger Weise zu realisieren. Solche abgehenden Gespräche werden beispielsweise über einen Rückruf (callback) oder ein mehrstufiges Wahlverfahren (z. B. 2-stage-dialing) realisiert.

Die Erfindung betrifft des Weiteren ein Mobilfunk-Gateway, das die folgenden Merkmale aufweist:
- eine Mehrzahl von Funkmodulen für die Mobilfunkkommunikation, wobei dem Mobilfunk-Gateway eine Mehrzahl von SIM-Karten zugeordnet oder zuordenbar sind, die jeweils eine Nutzung eines Funkmoduls für die Mobilfunkkommunikation ermöglichen,
- Mittel, die geeignet sind, eine von einem Mobilfunk-Endgerät an das Mobilfunk-Gateway gesandte Nachricht zu erfassen, die folgende Informationen aufweist: die Rufnummer einer einem aktuellen Mobilfunknetzwerk zugeordneten, zweiten SIM-Karte, wobei mit der zweiten SIM-Karte eine in dem Mobilfunk-Endgerät ursprünglich eingesetzte, einem Heimatnetzwerk zugeordnete erste SIM-Karte ersetzt worden ist, und mindestens eine der ersten, ersetzten SIM-Karte zugeordnete Information, bei der es sich beispielsweise um die erste Rufnummer und/oder mindestens eine Identifizierungsinformation betreffend die erste, ersetzte SIM-Karte handeln kann,
- Mittel, die anhand der in der Nachricht enthaltenen Informationen eine an die erste Rufnummer des Mobilfunk-Endgeräts gerichtete und an das Mobilfunk-Gateway geleitete TK-Verbindung der zweiten SIM-Karte und/oder der dieser zugeordneten zweiten Rufnummer zuordnen, und
- Mittel, die eine an die erste Rufnummer des Mobilfunk-Endgeräts gerichtete und an das Mobilfunk-Gateway geleitete TK-Verbindung an das mit einer der zweiten SIM-Karte versehene Mobilfunk-Endgerät unter Verwendung der in der Nachricht enthaltenen zweiten Rufnummer weiterleiten.

Dabei ist in einer Ausgestaltung vorgesehen, dass dem Gateway eine SIM-Karte zugeordnet ist, die die Partner-SIM-Karte der ersten SIM-Karte des Mobilfunk-Endgerätes ist, wobei die Partner-SIM-Karte jedenfalls nach Erreichen der Nachricht im Heimatnetzwerk eingebucht wird, so dass jede an die erste Rufnummer gerichtete TK-Verbindung zunächst an das Mobilfunk-Gateway geleitet wird, und dann von diesem an die temporär zugeordnete zweite Rufnummer weitergeleitet wird.

Die Erfindung betrifft des Weiteren ein Mobilfunk-Endgerät, das folgende Merkmale aufweist:
- Mittel, die einen Ersatz einer ersten, einem Heimatnetzwerk zugeordneten SIM-Karte durch eine zweite, einem aktuellen Mobilfunknetz zugeordnete SIM-Karte, erkennen,
- Mittel, die ausgelöst durch den Ersatz der SIM-Karte automatisch eine Nachricht erzeugen, die zumindest aufweist:
- die der zweiten SIM-Karte zugeordnete zweite Rufnummer, und
- mindestens eine Information, die die ersetzte SIM-Karte identifiziert,
- sowie Mittel, die die Nachricht nach dem Ersatz der SIM-Karte von dem Mobilfunk-Endgerät an eine definierte Rufnummer senden, die einem Mobilfunk-Gateway zugeordnet ist.

Dabei sind in einer Ausgestaltung des erfindungsgemäßen Mobilfunk-Endgerätes die Mittel, die automatisch eine Nachricht erzeugen, dazu ausgebildet, die IMEI der ersten SIM-Karte zu erfassen und nach Ersatz der SIM-Karte in die auszusendende Nachricht zu schreiben.

In einer weiteren Ausgestaltung erzeugen die Mittel, die automatisch eine Nachricht erzeugen, die Nachricht in Form einer SMS-Nachricht, wobei die neue, der zweiten SIM-Karte zugeordnete Rufnummer durch die Absenderinformation der SMS-Nachricht bereitgestellt wird.

Die Mittel, die die in Anspruch 19 genannten Funktionalitäten des Mobilfunk-Endgerätes realisieren, werden beispielsweise durch eine Softwareapplikation auf dem Mobilfunk-Endgerät bereitgestellt. Eine solche Softwareapplikation wird auch als Soft Client bezeichnet.

### Beschreibung von Ausführungsbeispielen

Die Erfindung wird nachfolgend unter Bezugnahme auf die Figuren der Zeichnung anhand mehrerer Ausführungsbeispiele näher erläutert. Es zeigen:
- Fig. 1: eine Telekommunikationsanordnung, die zur Durchführung des erfindungsgemäßen Verfahrens geeignet und ausgebildet ist; und
- Fig. 2: ein Ablaufdiagramm, das Schritte eines beispielhaften erfindungsgemäßen Verfahrens zum Leiten von TK-Verbindungen zu einem Mobilfunk-Gateway angibt.

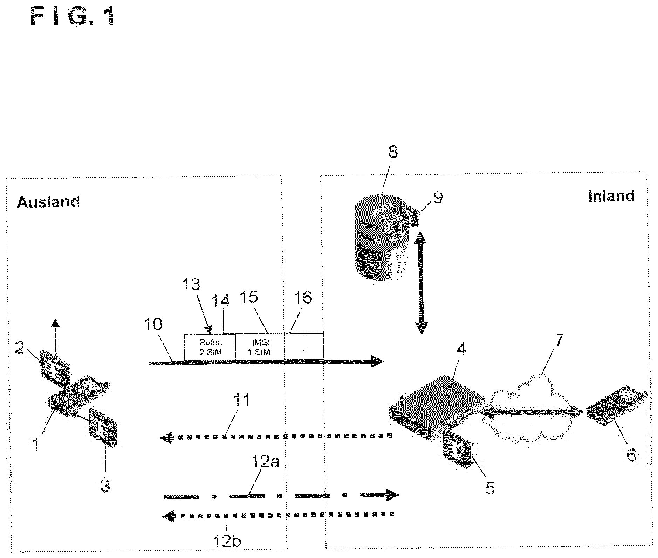

Die Figur 1 zeigt eine Telekommunikationsanordnung, die Netzwerke und Telekommunikations-Komponenten umfasst, mit denen ein erfindungsgemäßes Verfahren zum Leiten von TK-Verbindungen zu einem Mobilfunk-Endgerät realisierbar ist.

Die Kommunikationsanordnung umfasst als wesentliche Komponenten ein Mobilfunk-Endgerät 1 und ein Mobilfunk-Gateway 4. Optional ist zusätzlich ein SIM-Server 8 vorgesehen. Das Mobilfunk-Gateway 4 ist an ein Heimatnetz 7 des Mobilfunk-Endgerätes 1 angeschlossen.

Gemäß der Figur 1 wird die Situation betrachtet, dass das Mobilfunk-Endgerät 1 und sein Nutzer sich im Ausland befinden. Der Begriff "Ausland" dient dabei zur Abgrenzung gegenüber dem Staat oder der Region, in dem sich das Heimatnetzwerk des Mobilfunk-Endgeräts befindet ("Inland"). In weiteren Ausführungsbeispielen, für die die folgenden Ausführungen in entsprechender Weise gelten, befinden das Mobilfunk-Endgerät 1 und sein Nutzer sich dagegen nicht im Ausland, sondern in dem Staat oder der Region, in der auch das Heimatnetzwerk realisiert ist.

Dem Mobilfunk-Endgerät ist eine erste SIM-Karte 2 zugeordnet, die einen Netzteilnehmer eindeutig identifiziert und die das Mobilfunk-Endgerät 1 dem Heimatnetz 7 zuordnet. Die SIM-Karte weist dabei in an sich bekannter Weise eine IMSI-Nummer auf. Es ist nun vorgesehen, dass die erste SIM-Karte 2 des sich im Ausland befindlichen Mobilfunk-Endgeräts 1 durch eine zweite SIM-Karte 3 ersetzt wird, bei der es sich beispielsweise um eine Prepaid-SIM-Karte handelt. Die zweite SIM-Karte 3 ist einem ausländischen Mobilfunknetz zugeordnet.

Das Mobilfunk-Gateway 4 weist eine Mehrzahl von Funkmodulen für die Mobilfunkkommunikation auf. Dem Mobilfunk-Gateway sind dabei eine Mehrzahl von SIM-Karten zugeordnet, die jeweils eine Nutzung eines Funkmoduls für die Mobilfunkkommunikation ermöglichen. Zumindest einige der SIM-Karten des Mobilfunk-Gateways 4 sind dabei dem Heimatnetz 7 zugeordnet, so dass ein Funkmodul des Mobilfunk-Gateways 4 bei einer Mobilfunkkommunikation über das Heimatnetz 7 mit einem weiteren Mobilfunk-Endgerät 6 selbst ein Mobilfunk-Endgerät darstellt.

Dabei kann vorgesehen sein, dass das Heimatnetz 7 mit weiteren Mobilfunknetzen und/oder einer oder mehreren Telekommunikations-Festnetzen zusammengeschaltet ist und das weitere Mobilfunk-Endgerät 6 nicht unmittelbar, sondern über ein oder mehrere weitere Netze mit dem Heimatnetz 7 verbunden ist.

Der optional vorgesehene SIM-Server 8 weist einen Pool von SIM-Karten 9 auf. Je nach Anforderungsbedarf wird eine SIM-Karte 9 dem Mobilfunk-Gateway 4 vom SIM-Server 8 bereitgestellt, wobei das Bereitstellen einer solchen SIM-Karte 9 nicht physisch erfolgt, sondern lediglich die Informationen, die eine SIM-Karte identifizieren und deren Funktionalität widerspiegeln, per Datenübertragung an das Mobilfunk-Gateway 4 übertragen werden.

Es wird im Folgenden der Fall betrachtet, dass beim sich im Ausland befindlichen Mobilfunk-Endgerät 1 die dem Heimatnetzwerk 7 zugeordnete erste SIM-Karte 2 entfernt und durch die einem ausländischen Mobilfunknetz zugeordnete SIM-Karte 3 ersetzt wird. Dieser Austausch kann beispielsweise physisch erfolgen. Das Mobilfunk-Endgerät 1 umfasst eine Softwareapplikation, die ausgelöst durch einen solchen Ersatz der SIM-Karte automatisch eine Nachricht 13 erzeugt (vgl. Fig. 1).

Diese Nachricht 13 umfasst als Informationen 14, 15 zumindest die Rufnummer der zweiten SIM-Karte 3 und die IMSI-Nummer der ersten, inzwischen ersetzten SIM-Karte 2. Darüberhinaus kann die Nachricht 13 weitere Informationen 16 enthalten. Die Nachricht 13 ist in der Fig. 1 dabei nur schematisch dargestellt. Der konkrete Aufbau der Nachricht 13 kann anders sein. Die Information 13 wird beispielsweise per SMS 10 automatisch an das Mobilfunk-Gateway 4 gesandt. Auch ist die Versendung einer IMSI-Nummer nur beispielhaft zu verstehen. Stattdessen kann auch jede andere Information versendet werden, die es erlaubt, die zweite SIM-Karte am Mobilfunk-Gateway 4 zu identifizieren.

Anhand der erhaltenen IMSI-Nummer ist das Mobilfunk-Gateway 4 in der Lage, eine Partner-SIM-Karte 5 der ersten SIM-Karte 2 zu identifizieren. Die entsprechende Partner-SIM-Karte 5 befindet sich entweder bereits physisch im Mobilfunk-Gateway 4 oder wird dem Mobilfunk-Gateway 4 über den SIM-Server 8 zugeordnet.

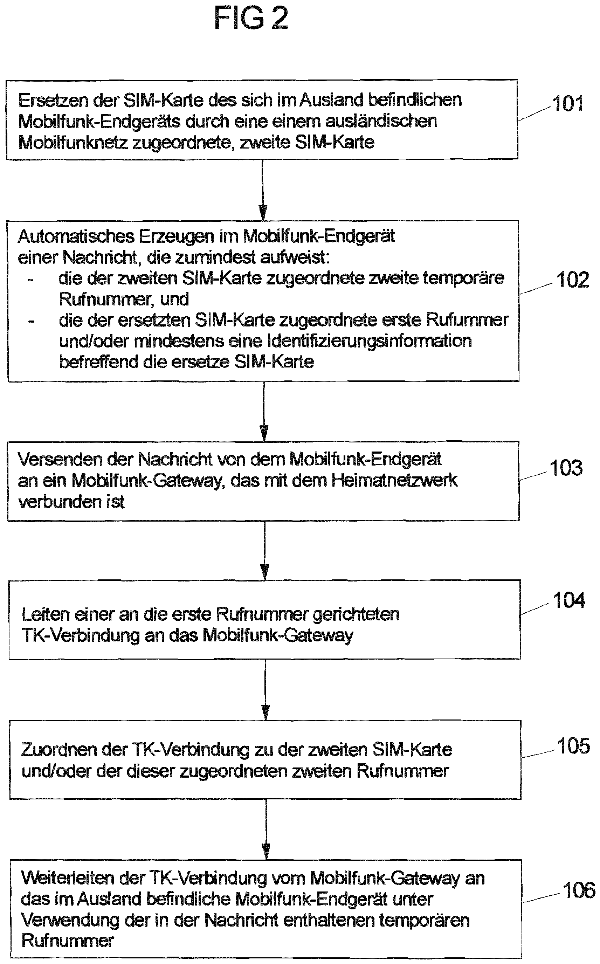

Die entsprechenden Verfahrensschritte sind in der Figur 2 nochmals in chronologischer Abfolge dargestellt. In einem ersten Schritt 101 wird die SIM-Karte 2 des sich beispielsweise im Ausland befindlichen Mobilfunk-Endgeräts 1 durch eine einem ausländischen Mobilfunknetz zugeordnete, zweite SIM-Karte 3 ersetzt. Daraufhin erzeugt im Schritt 102 eine Softwareapplikation des Mobilfunk-Endgerätes 1 im Mobilfunk-Endgerät 1 eine Nachricht 13, die zumindest aufweist: die der zweiten SIM-Karte 3 zugeordnete zweite, temporäre Rufnummer, und mindestens eine Identifizierungsidentifikation betreffend die ersetzte SIM-Karte 2, wobei als diesbezügliche Identifizierungsinformation bevorzugt die IMSI-Nummer verwendet wird.

Dabei ist es ebenfalls möglich, dass statt oder ergänzend zu der IMSI-Nummer die der ersten SIM-Karte 2 zugeordnete erste Rufnummer in die Nachricht aufgenommen wird. Da die IMSI-Nummer und die erste Rufnummer einander zugeordnet sind, reicht die Übertragung einer dieser Informationen, sofern das Mobilfunk-Gateway 4 in der Lage ist, über die Kenntnis der einen Information die andere Information zu beschaffen.

Die erzeugte Nachricht 13 wird anschließend in Schritt 103 als SMS oder in anderer Weise (z.B. über ein IP-Netz) vom Mobilfunk-Endgerät 1 an das Mobilfunk-Gateway 4 gesandt. Dieses Versenden kann, wie in Figur 1 dargestellt, direkt erfolgen. In einer alternativen Ausgestaltung ist es ebenfalls denkbar, dass die Nachricht an den SIM-Server 8 gesandt und von diesem, gegebenenfalls mit Informationen über eine zugeordnete Partner-SIM-Karte, an das Gateway 4 übersandt wird.

Durch Einbuchen der Partner-SIM-Karte 5 im Heimatnetz 7 werden an die erste Rufnummer (der Standard-SIM-Karte 2) gerichtete TK-Verbindungen vom Heimatnetz 7 nunmehr an ein Funkmodul des Mobilfunk-Gateways 4 geroutet, in das die Partner-SIM-Karte 5 eingesetzt ist. Somit werden sämtliche an die erste Rufnummer gerichtete TK-Verbindungen an das Mobilfunk-Gateway 4 geleitet, vgl. Schritt 104 der Figur 2.

Aufgrund der Informationen in der vom Mobilfunk-Endgerät 1 erhaltenen SMS ist es dem Mobilfunk-Gateway 4 nun möglich, eine an das Mobilfunk-Gateway 4 geroutete TK-Verbindung, die mit der Rufnummer der ersten SIM-Karte 2 vorgenommen wurde, der aktuellen SIM-Karte 3 und der aktuellen, temporären Rufnummer des Mobilfunk-Endgerätes 1 im ausländischen Mobilfunknetz zuzuordnen. Die Zuordnung erfolgt beispielsweise über die Rufnummer und/oder die IMEI-Nummer der ersten SIM-Karte 2, vgl. Schritt 105 der Figur 2.

Hierzu weist das Mobilfunk-Gateway 4 Mittel auf, die geeignet sind, eine von dem Mobilfunk-Endgerät 1 an das Mobilfunk-Gateway 4 gesandte Nachricht 13 zu erfassen, sowie Mittel, die anhand der in der Nachricht enthaltenen Informationen eine an das Mobilfunk-Gateway 4 geleitete TK-Verbindung der zweiten SIM-Karte 3 und/oder der dieser zugeordneten zweiten Rufnummer zuordnen. Diese Mittel sind beispielsweise durch einen Mikroprozessor, einen Speicherbaustein und geeignete Software realisiert und prüfen beispielsweise anhand einer Zuordnungstabelle, an welche Rufnummer eingehende Rufe weiterzuleiten sind.

Anschließend kann nun in Schritt 106 die erhaltene TK-Verbindung vom Mobilfunk-Gateway 4 an das im Ausland befindliche Mobilfunk-Endgerät 1 unter Verwendung der temporären Rufnummer des Mobilfunk-Endgeräts 1 weitergeleitet werden.

Dabei ist insbesondere vorgesehen, dass ein eingehender Ruf gemäß Pfeil 11 der Figur 1 über ein TDM-Netz, also ein internationales Festnetz an das ausländische Mobilfunknetz geroutet und dann über dieses dem Mobilfunk-Endgerät 1 zugestellt wird.

Dies ist mit dem Vorteil verbunden, dass die Gesprächsdatenübertragung über ein TDM-Netz kostengünstig ist, jedenfalls im Vergleich zu bei einem Auslands-Roaming entstehenden Kosten. Es ist jedoch ebenfalls möglich, die TK-Verbindung über ein anderes Kommunikationsnetz als ein TDM-Netz an das Mobilfunk-Endgerät 1 weiterzuleiten, beispielsweise über das Internet oder ein anderes IP-Netz.

Das erfindungsgemäße Verfahren beruht somit in einer Ausgestaltung auf dem Gedanken, eine Partner-SIM-Karte der ersten SIM-Karte statt am aktuellen Ort des Mobilfunk-Endgerätes 1 am Mobilfunk-Gateway 4 einzubuchen und die dann an das Mobilfunk-Gateway 4 gerouteten TK-Verbindung über ein kostengünstiges Netz an die temporäre Nummer des temporär in einem ausländischen Mobilfunknetz eingebuchten Mobilfunk-Endgerätes 1 zu leiten.

Das in Bezug auf die Figur 1 beschriebene Verfahren kann dabei mehrere Variationen erfahren. Beispielsweise kann vorgesehen sein, dass statt des Einbuchens einer Partner-SIM-Karte am Mobilfunk-Gateway 4 noch vor dem Wechsel der SIM-Karte am Mobilfunk-Endgerät 1 eine permanente Rufumleitung an eine SIM-Karte des Mobilfunk-Gateways 4 eingestellt wird. Auch hierdurch wird erreicht, dass jede an die erste Rufnummer gerichtete TK-Verbindung an das Mobilfunk-Gateway 4 geroutet wird. Das weitere Verfahren ist dann wie oben beschrieben. Die Rufumleitung kann beispielsweise manuell oder ebenfalls durch die erwähnte Softwareapplikation eingestellt werden. Die Einstellung einer ständigen Rufumleitung führt dabei nicht zu Zusatzkosten, da gemäß den geltenden Standards eine ständige Rufumleitung nicht mit Roamingkosten beaufschlagt wird.

In einer weiteren Alternative wird die im Mobilfunk-Endgerät 1 bereitgestellte Nachricht nicht als SMS, sondern in anderer Weise, beispielsweise als Datenpaket über das Internet zum Mobilfunk-Gateway 4 übertragen.

Es wird darauf hingewiesen, dass unter dem Begriff "Leiten" und "Weiterleiten" einer TK-Verbindung verstanden wird, dass sowohl die einer TK-Verbindung zugehörigen Signalisierungsinformationen als auch die eigentlichen Nutzdaten (Gesprächsdaten, SMS-Nachrichten) über die jeweils betroffenen Kommunikationseinrichtungen und Netze geroutet werden. Das Leiten und Weiterleiten einer TK-Verbindung betrifft somit nicht nur das Leiten und Weiterleiten von Signalisierungsinformationen, sondern auch der eigentlichen Nutzdaten. Das Gespräch selbst wird über das Gateway 4 an die temporäre Rufnummer des Mobilfunk-Endgerätes 1 geleitet.

Die erfindungsgemäße Lösung führt zu erheblichen Kosteneinsparungen bei Telefongesprächen im Ausland. Das folgende Beispiel zeigt die Kosteneinsparung anhand der aktuellen Tarife des Urlaubslandes Ägypten.

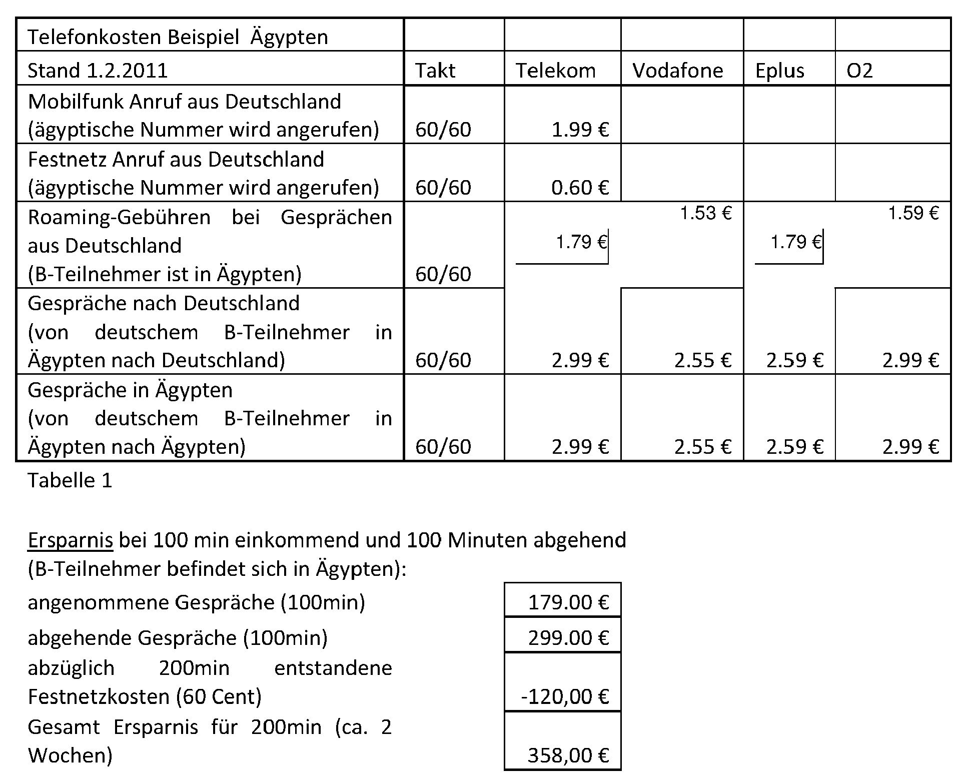

Diese Berechnung berücksichtigt nicht die Kosten für die prepaid-Karte 3, die jedoch zu vernachlässigen sind.

Das erfindungsgemäße Verfahren kann ebenfalls für ankommende SMS-Nachrichten eingesetzt werden. Ankommende SMS-Nachrichten werden ebenfalls über das Mobilfunk-Gateway 4 auf das Mobilfunk-Endgerät 1 mit der lokalen SIM-Karte 3 weitergeleitet. Die originale Absender-Adresse wird dabei in einer Ausführungsvariante am Gateway 4 in den SMS-Text integriert.

Des Weiteren können über das beschriebene Verfahren auch abgehende Gespräche kostengünstig durch Datenübertragung vom Mobilfunk-Gateway 4 an das Mobilfunk-Endgerät 1 über ein Festnetz oder IP-Netz realisiert werden. Dies wird über Rückruf (CallBack) oder ein mehrstufiges Wahlverfahren wie z. B. "2-stage-dialing" realisiert. Ein entsprechender Rückruf oder ein mehrstufiges Wahlverfahren können dabei über die erwähnte Softwareapplikation im Mobilfunk-Endgerät 1 vermittelt werden.

Ein Rückruf erfolgt vom Mobilfunk-Gateway 4 über das Festnetz oder ein IP-Netz. Das Mobilfunk-Endgerät 1 ruft dabei über die Softwareapplikation zunächst das Mobilfunk-Gateway 4 an. Dies kann über einen Telefonanruf zur Partner-SIM-Karte oder alternativ über eine SMS erfolgen, die an die Partner-SIM-Karte (oder eine bestimmte, durch den SIM-Server 8 verwaltete Karte) gesandt wird. Daraufhin wird ein Rückruf realisiert.

Abgehende SMS-Nachrichten können dagegen nicht über ein Festnetz befördert werden, benötigen zur Übertragung also eine normale Mobilfunkverbindung. Allerdings kann im Heimatnetz 7, bei Verwendung einer Partner-SIM-Karte im Mobilfunk-Gateway 4, die SMS mit der korrekten Absenderadresse weitergeleitet werden. Die SMS wird somit zunächst vom Mobilfunk-Endgerät 1 über ein internationales Roaming zum Mobilfunk-Gateway 4 und von diesem unter Hinzufügung der korrekten Absenderadresse an das Mobilfunk-Endgerät 6 weitergeleitet.

Die Erfindung beschränkt sich in ihrer Ausgestaltung nicht auf die vorstehend erläuterten Ausführungsbeispiele, die lediglich beispielhaft zu verstehen sind. Beispielsweise kann die im Mobilfunk-Endgerät 1 bei Ersatz der SIM-Karte erzeugte Nachricht andere und/oder weitere Informationen enthalten. Auch kann die jeweils erfolgende Datenübertragung zwischen dem Mobilfunk-Endgerät 1 und dem Mobilfunk-Gateway 4 in anderer Weise und/oder über andere Netze erfolgen.

## Patentansprüche

1. Verfahren zum Leiten von Telekommunikationsverbindungen, TK-Verbindungen, zu einem Mobilfunk-Endgerät (1), das sich im Empfangsbereich eines aktuellen Mobilfunknetzes befindet, das ungleich einem Heimatnetzwerk des Mobilfunk-Endgeräts (1) ist, wobei das Mobilfunk-Endgerät (1) zunächst eine erste, dem Heimatnetzwerk (7) zugeordnete SIM-Karte (2) aufweist, der eine erste Rufnummer zugeordnet ist, und wobei das Verfahren die folgenden Schritte umfasst:
- Ersetzen der ersten SIM-Karte (2) des Mobilfunk-Endgeräts (1) durch eine dem aktuellen Mobilfunknetz zugeordnete, zweite SIM-Karte (3), der eine zweite Rufnummer (14) zugeordnet ist,
- ausgelöst durch den Ersatz der SIM-Karte (2, 3), automatisches Erzeugen im Mobilfunk-Endgerät (1) einer Nachricht (13), die zumindest aufweist:
- die der zweiten SIM-Karte (3) zugeordnete zweite Rufnummer (14), und
- mindestens eine Information (15), die die ersetzte SIM-Karte (2) identifiziert,
- Versenden der Nachricht (13) von dem Mobilfunk-Endgerät (1) an ein Mobilfunk-Gateway (4),
- Leiten jeder an die erste Rufnummer gerichteten TK-Verbindung an das Mobilfunk-Gateway (4),
- Zuordnen einer solchen TK-Verbindung anhand der in der Nachricht (13) enthaltenen Informationen zu der zweiten SIM-Karte (3) und/oder der dieser zugeordneten zweiten Rufnummer, und
- Weiterleiten einer solchen TK-Verbindung vom Mobilfunk-Gateway (4) über mindestens ein Kommunikationsnetz an das mit der zweiten SIM-Karte (3) versehene Mobilfunk-Endgerät (1) unter Verwendung der in der Nachricht (13) enthaltenen zweiten Rufnummer (14).

2. Verfahren nach Anspruch 1, **dadurch gekennzeichnet, dass** eine an die erste Rufnummer gerichtete TK-Verbindung an das Mobilfunk-Gateway (4) geleitet wird, indem bei Erhalt der Nachricht am Mobilfunk-Gateway (4) das Mobilfunk-Endgerät (1) mittels einer SIM-Karte (5) des Mobilfunk-Gateways (4) am Ort des Mobilfunk-Gateways (4) im Heimatnetzwerk eingebucht wird.

3. Verfahren nach Anspruch 2, **dadurch gekennzeichnet, dass** das Einbuchen des Mobilfunk-Endgeräts (1) im Heimatnetzwerk (7) mittels einer Partner-SIM-Karte (5) der ersetzten SIM-Karte (2) erfolgt, wobei die Partner-SIM-Karte (5) sich im Mobilfunk-Gateway (4) befindet oder diesem über einen SIM-Server (8) zugeordnet wird.

4. Verfahren nach Anspruch 1, **dadurch gekennzeichnet, dass** eine an die erste Rufnummer gerichtete TK-Verbindung an das Mobilfunk-Gateway (4) geleitet wird, indem das Mobilfunk-Endgerät (1) vor dem Austausch der ersten SIM-Karte (2) eine ständige Rufweiterleitung an das Mobilfunk-Gateway (4) einstellt.

5. Verfahren nach einem der vorangehenden Ansprüche, **dadurch gekennzeichnet, dass** mindestens eine Information, die die ersetzte SIM-Karte (2) identifiziert, die der ersetzten SIM-Karte (2) zugeordnete erste Rufnummer und/oder mindestens eine Identifizierungsinformation (15) betreffend die ersetzte SIM-Karte (2) ist.

6. Verfahren nach Anspruch 5, **dadurch gekennzeichnet, dass** die automatisch im Mobilfunk-Endgerät (1) erzeugte Nachricht (13) zumindest die zweite, der zweiten SIM-Karte (3) zugeordnete Rufnummer (14) und die IMSI (15) der ersten, ersetzten SIM-Karte (2) enthält.

7. Verfahren nach einem der vorangehenden Ansprüche, **dadurch gekennzeichnet, dass** die zweite SIM-Karte (3) eine prepaid SIM-Karte ist.

8. Verfahren nach einem der vorangehenden Ansprüche, **dadurch gekennzeichnet, dass** die automatisch im Mobilfunk-Endgerät (1) erzeugte Nachricht (13) über einen SIM-Server (8) an das Mobilfunk-Gateway (4) übersandt wird.

9. Verfahren nach einem der vorangehenden Ansprüche, sofern rückbezogen auf Anspruch 3, **dadurch gekennzeichnet, dass** die Partner-SIM-Karte in dem SIM-Server (8) angeordnet ist und die für eine Authentifizierung relevanten Daten der Partner-SIM-Karte an das Mobilfunk-Gateway (4) übertragen werden, wenn die im Mobilfunk-Endgerät (1) erzeugte Nachricht (13) beim Mobilfunk-Gateway (4) und/oder beim SIM-Server (8) eingeht.

10. Verfahren nach einem der vorangehenden Ansprüche, **dadurch gekennzeichnet, dass** vom Mobilfunk-Endgerät (1) abgehende TK-Verbindungen über Rückruf oder ein mehrstufiges Wahlverfahren unter Zwischenschaltung des Mobilfunk-Gateways (4) realisiert werden.

11. Verfahren nach einem der vorangehenden Ansprüche, **dadurch gekennzeichnet, dass** das Mobilfunk-Endgerät sich initial bezogen auf den Staat, in dem sich sein Heimatnetzwerk (7) befindet, in einem ausländischen Staat befindet, wobei das aktuelle Mobilfunknetz ein ausländisches Mobilfunknetz ist und die erste SIM-Karte (2) durch eine dem ausländischen Mobilfunknetz zugeordnete, zweite SIM-Karte (3) ersetzt wird.

12. Mobilfunk-Gateway, das aufweist:
- eine Mehrzahl von Funkmodulen für die Mobilfunkkommunikation, wobei dem Mobilfunk-Gateway (4) eine Mehrzahl von SIM-Karten zugeordnet oder zuordenbar sind, die jeweils eine Nutzung eines Funkmoduls für die Mobilfunkkommunikation ermöglichen,
- Mittel, die geeignet sind, eine von einem Mobilfunk-Endgerät (1) an das Mobilfunk-Gateway (4) gesandte Nachricht (13) zu erfassen, die folgende Informationen aufweist:
- eine zweite Rufnummer (14) einer dem aktuellen Mobilfunknetzwerk zugeordneten, zweiten SIM-Karte (3), wobei mit der zweiten SIM-Karte (3) eine in dem Mobilfunk-Endgerät (1) ursprünglich eingesetzte, einem Heimatnetzwerk (7) zugeordnete erste SIM-Karte (2), der eine erste Rufnummer zugeordnet ist, ersetzt worden ist, wobei das aktuelle Mobilfunknetz ungleich dem Heimatnetzwerk (7) des Mobilfunk-Endgeräts (1) ist, und
- mindestens eine Information (15), die die ersetzte SIM-Karte (2) identifiziert,
- Mittel, die anhand der in der Nachricht (13) enthaltenen Informationen eine an die erste Rufnummer des Mobilfunk-Endgeräts (1) gerichtete und an das Mobilfunk-Gateway (4) geleitete Telekommunikationsverbindung, TK-Verbindung, der zweiten SIM-Karte (3) und/oder der dieser zugeordneten zweiten Rufnummer zuordnen, und
- Mittel, die eine an die erste Rufnummer des Mobilfunk-Endgeräts (1) gerichtete und an das Mobilfunk-Gateway (4) geleitete TK-Verbindung an das mit einer der zweiten SIM-Karte (3) versehene Mobilfunk - Endgerät (1) unter Verwendung der in der Nachricht (13) enthaltenen zweiten Rufnummer (14) weiterleiten.

13. Mobilfunk-Gateway nach Anspruch 12, **dadurch gekennzeichnet, dass** dem Mobilfunk-Gateway (4) eine SIM-Karte (5) zugeordnet ist, die die Partner-SIM-Karte der ersten SIM-Karte (2) des Mobilfunk-Endgeräts (1) ist, wobei die Partner-SIM-Karte (5) jedenfalls nach Erreichen der Nachricht (13) im Heimatnetzwerk (7) einbucht wird, so dass jede an die erste Rufnummer gerichteten TK-Verbindung an das Mobilfunk-Gateway (4) geleitet wird.

14. Mobilfunk-Gateway nach Anspruch 13, **dadurch gekennzeichnet, dass** das Mobilfunk-Gateway (4) derart ausgebildet ist, dass mindestens einige der Funktionen des Mobilfunk-Gateways (4) über einen SIM-Server (8) kontrolliert werden, insbesondere das Mobilfunk-Gateway (4) die für eine Authentifizierung relevanten Daten einer Partner-SIM-Karte von einem SIM-Server (8) erhält, wobei die Partner-SIM-Karte in dem SIM-Server (8) angeordnet ist.

15. Mobilfunk-Endgerät, (1), das zunächst eine erste, einem Heimatnetzwerk (7) zugeordnete SIM-Karte (2) aufweist, der eine erste Rufnummer zugeordnet ist, wobei das Mobilfunk-Endgerät (1) weiter aufweist:
- Mittel, die einen Ersatz der ersten, dem Heimatnetzwerk (7) zugeordneten SIM-Karte (2) durch eine zweite, einem aktuellen Mobilfunknetz zugeordnete SIM-Karte (3), der eine zweite Rufnummer (14) zugeordnet ist, erkennen, wobei das aktuelle Mobilfunknetz ungleich dem Heimatnetzwerk (7) des Mobilfunk-Endgeräts (1) ist,
- Mittel, die ausgelöst durch den Ersatz der SIM-Karte (2, 3) automatisch eine Nachricht (13) erzeugen, die zumindest aufweist:
- die der zweiten SIM-Karte (3) zugeordnete zweite Rufnummer (14), und
- mindestens eine Information (15), die die ersetzte SIM-Karte (2) identifiziert,
- Mittel, die die Nachricht (13) nach dem Ersatz der SIM-Karte (2, 3) von dem Mobilfunk-Endgerät (1) an eine definierte Rufnummer senden, die einem Mobilfunk-Gateway (4) zugeordnet ist.

## Claims

1. A method for routing telecommunication connections, TC connections, to a mobile communications terminal (1) located in the reception area of a current mobile network that differs from a home network of the mobile communications terminal (1), wherein the mobile communications terminal (1) firstly has a first SIM card (2), which is assigned to the home network (7) and to which is assigned a first telephone number, and wherein the method comprises the following steps:
- replacing the first SIM card (2) in the mobile communications terminal (1) by a second SIM card (3), which is assigned to the current mobile network and to which is assigned a second telephone number (14),
- actuated by replacing the SIM card (2, 3), automatically generating in the mobile communications terminal (1) a message (13) comprising at least:
- the second telephone number (14), which is assigned to the second SIM card (3), and
- at least one piece of information (15) identifying the replaced SIM card (2),
- sending the message (13) from the mobile communications terminal (1) to a mobile communications gateway (4),
- routing each TC connection addressed to the first telephone number to the mobile communications gateway (4),
- assigning such a TC connection to the second SIM card (3) based on the information contained in the message (13) and/or to the second telephone number, which is assigned to the second SIM card, and
- forwarding such a TC connection from the mobile communications gateway (4) via at least one communications network to the mobile communications terminal (1) equipped with the second SIM card (3) using the second telephone number (14) contained in the message (13).

2. The method according to claim 1, **characterized in that** a TC connection addressed to the first telephone number is routed to the mobile communications gateway (4) by registering, when the message is received at the mobile communications gateway (4), the mobile communications terminal (1) in the home network at the location of the mobile communications gateway (4) by means of a SIM card (5) of the mobile communications gateway (4).

3. The method according to claim 2, **characterized in that** a partner SIM card (5) to the replaced SIM card (2) is used to register the mobile communications terminal (1) in the home network (7), wherein the partner SIM card (5) is located in the mobile communications gateway (4) or is assigned thereto via a SIM server (8).

4. The method according to claim 1, **characterized in that** a TC connection addressed to the first telephone number is routed to the mobile communications gateway (4) **in that** the mobile communications terminal (1), before the SIM card (2) is replaced, configures permanent call forwarding to the mobile communications gateway (4).

5. The method according to any of the preceding claims, **characterized in that** at least one piece of information identifying the replaced SIM card (2) is the first telephone number, which is assigned to the replaced SIM card (2), and/or at least one piece of identification information (15) relating to the replaced SIM card (2).

6. The method according to claim 5, **characterized in that** the message (13) that is automatically generated in the mobile communications terminal (1) contains at least the second telephone number (14), which is assigned to the second SIM card (3), and the IMSI (*International Mobile Subscriber Identity*) (15) of the first, replaced SIM card (2).

7. The method according to any of the preceding claims, **characterized in that** the second SIM card (3) is a prepaid SIM card.

8. The method according to any of the preceding claims, **characterized in that** the message (13) that is automatically generated in the mobile communications terminal (1) is sent via a SIM server (8) to the mobile communications gateway (4).

9. The method according to any of the preceding claims, if related to claim 3, **characterized in that** the partner SIM card is arranged in the SIM server (8), and the data in the partner SIM card that is relevant to an authentication is transferred to the mobile communications gateway (4) when the message (13) generated in the mobile communications terminal (1) is received at the mobile communications gateway (4) and/or at the SIM server (8).

10. The method according to any of the preceding claims, **characterized in that** outgoing TC connections from the mobile communications terminal (1) are implemented by means of callback or a multi-stage dialing process with the mobile communications gateway (4) connected therebetween.

11. The method according to any of the preceding claims, **characterized in that** the mobile communications terminal is initially located in a foreign country with respect to the country in which its home network (7) is located, wherein the current mobile network is a foreign mobile network, and the first SIM card (2) is replaced by a second SIM card (3), which is assigned to the foreign mobile network.

12. A mobile communications gateway comprising:
- a plurality of radio modules for mobile communication, wherein a plurality of SIM cards are assigned or can be assigned to the mobile communications gateway (4), each of which enable use of a radio module for mobile communication,
- means that are suitable for detecting a message (13) sent from a mobile communications terminal (1) to the mobile communications gateway (4), which message comprises the following information:
- a second telephone number (14) of a second SIM card (3), which is assigned to the current mobile network, wherein a first SIM card (2), which was originally inserted in the mobile communications terminal (1) and is assigned to a home network (7), which is assigned a first telephone number, has been replaced by the second SIM card (3),
wherein the current mobile network differs from the home network (7) of the mobile communications terminal (1), and
- at least one piece of information (15) identifying the replaced SIM card (2),
- means for assigning, based on the information contained in the message (13), a telecommunications connection, a TC connection, addressed to the first telephone number of the mobile communications terminal (1) and routed to the mobile communications gateway (4), to the second SIM card (3) and/or to the second telephone number, which is assigned to said SIM card, and
- means for forwarding a TC connection addressed to the first telephone number of the mobile communications terminal (1) and routed to the mobile communications gateway (4), to the mobile communications terminal (1) equipped with the second SIM card (3) using the second telephone number (14) contained in the message (13).

13. The mobile communications gateway according to claim 12, **characterized in that** a SIM card (5) that is the partner SIM card to the first SIM card (2) of the mobile communications terminal (1) is assigned to the mobile communications gateway (4), wherein the partner SIM card (5) is registered in the home network (7) anyway when the message (13) is received, so that each TC connection addressed to the first telephone number is routed to the mobile communications gateway (4).

14. The mobile communications gateway according to claim 13, **characterized in that** the mobile communications gateway (4) is designed such that at least some of the functions of the mobile communications gateway (4) are supervised via a SIM server (8), in particular the mobile communications gateway (4) receives from a SIM server (8) the data of a partner SIM card that is relevant to an authentication, wherein the partner SIM card is arranged in the SIM server (8).

15. A mobile communications terminal (1) first comprising a first SIM card (2) assigned to a home network (7), which has a first telephone number assigned to it, wherein the mobile communications terminal (1) further comprises:
- means which detect a replacement of the first SIM card (2), which is assigned to the home network (7), by a second SIM card (3), which is assigned to a current mobile network, which is assigned a second telephone number (14), wherein the current mobile network differs from the home network (7) of the mobile communications terminal (1),
- means which, actuated by the replacement of the SIM card (2, 3), automatically generate a message (13) that comprises at least:
- the second telephone number (14), which is assigned to the second SIM card (3), and
- at least one piece of information (15) identifying the replaced SIM card (2),
- means which, after the SIM card (2, 3) is replaced, send the message (13) from the mobile communications terminal (1) to a defined telephone number that is assigned to a mobile communications gateway (4).

## Revendications

1. Procédé destiné à guider des liaisons de télécommunication, liaisons TK, vers un terminal de téléphonie mobile (1) qui se trouve dans la zone de réception d'un réseau de téléphonie mobile en cours qui est différent d'un réseau domestique du terminal de téléphonie mobile (1), dans lequel le terminal de téléphonie mobile (1) présente tout d'abord une première carte SIM (2) attribuée au réseau domestique (7), à laquelle est attribué un premier numéro d'appel, et dans lequel le procédé comprend les étapes suivantes qui consistent à :
- remplacer la première carte SIM (2) du terminal de téléphonie mobile (1) par une seconde carte SIM (3) attribuée au réseau de téléphonie mobile en cours, à laquelle est attribué un second numéro d'appel (14),
- déclenché par le remplacement de la carte SIM (2, 3), produire automatiquement dans le terminal de téléphonie mobile (1) un message (13) qui présente au moins :
- le second numéro d'appel (14) attribué à la seconde carte SIM (3), et
- au moins une information (15) qui identifie la carte SIM (2) remplacée,
- envoyer le message (13) depuis le terminal de téléphonie mobile (1) vers une passerelle de téléphonie mobile (4),
- guider chaque liaison TK adressée au premier numéro d'appel vers la passerelle de téléphonie mobile (4),
- attribuer une telle liaison TK en fonction des informations contenues dans le message (13) à la seconde carte SIM (3) et/ou au second numéro d'appel attribué à celle-ci, et
- transférer une telle liaison TK depuis la passerelle de téléphonie mobile (4) via au moins un réseau de communication vers le terminal de téléphonie mobile (1) doté de la seconde carte SIM (3) en utilisant le second numéro d'appel (14) contenu dans le message (13).

2. Procédé selon la revendication 1, **caractérisé en ce qu'**une liaison TK adressée au premier numéro d'appel est guidée vers la passerelle de téléphonie mobile (4) **en ce que**, à réception du message au niveau de la passerelle de téléphonie mobile (4), le terminal de téléphonie mobile (1) est intégré à l'endroit de la passerelle de téléphonie mobile (4) dans le réseau domestique au moyen d'une carte SIM (5) de la passerelle de téléphonie mobile (4).

3. Procédé selon la revendication 2, **caractérisé en ce que** l'intégration du terminal de téléphonie mobile (1) dans le réseau domestique (7) s'effectue au moyen d'une carte SIM partenaire (5) de la carte SIM (2) remplacée, dans lequel la carte SIM partenaire (5) se trouve dans la passerelle de téléphonie mobile (4) ou est attribuée à celle-ci via un serveur SIM (8).

4. Procédé selon la revendication 1, **caractérisé en ce qu'**une liaison TK adressée au premier numéro d'appel est guidée vers la passerelle de téléphonie mobile (4) **en ce que** le terminal de téléphonie mobile (1) règle un transfert d'appel permanent vers la passerelle de téléphonie mobile (4) avant l'échange de la première carte SIM (2).

5. Procédé selon l'une des revendications précédentes, **caractérisé en ce qu'**au moins une information, qui identifie la carte SIM (2) remplacée, est le premier numéro d'appel attribué à la première carte SIM (2) remplacée et/ou au moins une information d'indentification (15) relative à la carte SIM (2) remplacée.

6. Procédé selon la revendication 5, **caractérisé en ce que** le message (13) automatiquement produit dans le terminal de téléphonie mobile (1) contient au moins le second numéro d'appel (14) attribué à la seconde carte SIM (3) et la IMSI ("*International Mobile Subscriber Identity*") (15) de la première carte SIM (2) remplacée.

7. Procédé selon l'une des revendications précédentes, **caractérisé en ce que** la seconde carte SIM (3) est une carte SIM prépayée.

8. Procédé selon l'une des revendications précédentes, **caractérisé en ce que** le message (13) automatiquement produit dans le terminal de téléphonie mobile (1) est envoyé vers la passerelle de téléphonie mobile (4) via un serveur SIM (8).

9. Procédé selon l'une des revendications précédentes, dans la mesure où elle est dépendante de la revendication 3, **caractérisé en ce que** la carte SIM partenaire est agencée dans le serveur SIM (8) et les données de la carte SIM partenaire pertinentes pour une authentification sont transmises à la passerelle de téléphonie mobile (4) lorsque le message (13) produit dans le terminal de téléphonie mobile (1) arrive à la passerelle de téléphonie mobile (4) et/ou au serveur SIM (8).

10. Procédé selon l'une des revendications précédentes, **caractérisé en ce que** des liaisons TK qui partent du terminal de téléphonie mobile (1) sont réalisées via un rappel ou un procédé de numérotation en plusieurs étapes avec interposition de la passerelle de téléphonie mobile (4).

11. Procédé selon l'une des revendications précédentes, **caractérisé en ce que** le terminal de téléphonie mobile se trouve, initialement situé dans un État étranger par rapport à l'Etat dans lequel se trouve son réseau domestique (7), dans lequel le réseau de téléphonie mobile en cours est un réseau de téléphonie mobile étranger et la première carte SIM (2) est remplacée par une seconde carte SIM (3) attribuée au réseau de téléphonie mobile étranger.

12. Passerelle de téléphonie mobile, qui présente :
- une pluralité de modules de téléphonie pour la communication de téléphonie mobile, dans laquelle une pluralité de cartes SIM sont ou peuvent être attribuées à la passerelle de téléphonie mobile (4), qui permettent respectivement une utilisation d'un module de téléphonie pour la communication de téléphonie mobile,
- des moyens qui sont appropriés pour saisir un message (13) envoyé depuis un terminal de téléphonie mobile (1) vers la passerelle de téléphonie mobile (4), lequel message présente les informations suivantes :
- un second numéro d'appel (14) d'une seconde carte SIM (3) attribuée au réseau de téléphonie mobile en cours, dans laquelle, avec la seconde carte SIM (3), a été remplacée une première carte SIM (2), attribuée à un réseau domestique (7) et initialement insérée dans le terminal de téléphonie mobile (1), à laquelle est attribué un numéro d'appel,
dans laquelle le réseau de téléphonie mobile en cours est différent du réseau domestique (7) du terminal de téléphonie mobile (1), et
- au moins une information (15) qui identifie la carte SIM (2) remplacée,
- des moyens qui, en fonction des informations contenues dans le message (13), attribuent une liaison de télécommunication, liaison TK, adressée au premier numéro d'appel du terminal de téléphonie mobile (1) et guidée vers la passerelle de téléphonie mobile (4), de la seconde carte SIM (3) et/ou du second numéro d'appel attribué à celle-ci, et
- des moyens qui transfèrent une liaison TK, adressée au premier numéro d'appel du terminal de téléphonie mobile (1) et guidée vers la passerelle de téléphonie mobile (4), vers le terminal de téléphonie mobile (1) doté de l'une de la seconde carte SIM (3) en utilisant le second numéro d'appel (14) contenu dans le message (13).

13. Passerelle de téléphonie mobile selon la revendication 12, **caractérisée en ce qu'**à la passerelle de téléphonie mobile (4) est attribuée une carte SIM (5) qui est la carte SIM partenaire de la première carte SIM (2) du terminal de téléphonie mobile (1), dans laquelle la carte SIM partenaire (5) est intégrée dans le réseau domestique (7) quoi qu'il en soit après que le message (13) est parvenu, de sorte que chaque liaison TK adressée au premier numéro d'appel soit guidée vers la passerelle de téléphonie mobile (4).

14. Passerelle de téléphonie mobile selon la revendication 13, **caractérisée en ce que** la passerelle de téléphonie mobile (4) est conçue de telle sorte qu'au moins certaines des fonctions de la passerelle de téléphonie mobile (4) sont commandées via un serveur SIM (8), en particulier la passerelle de téléphonie mobile (4) obtient d'un serveur SIM (8) les données d'une carte SIM partenaire pertinentes pour une authentification, dans laquelle la carte SIM partenaire est agencée dans le serveur SIM (8).

15. Terminal de téléphonie mobile (1) qui présente tout d'abord une première carte SIM (2) attribuée à un réseau domestique (7), à laquelle est attribué un premier numéro d'appel, dans lequel le terminal de téléphonie mobile (1) présente en outre :
- des moyens qui reconnaissent un remplacement de la première carte SIM (2) attribuée au réseau domestique (7) par une seconde carte SIM (3) attribuée à un réseau de téléphonie mobile en cours, à laquelle est attribué un second numéro d'appel (14), dans lequel le réseau de téléphonie mobile en cours est différent du réseau domestique (7) du terminal de téléphonie mobile (1),
- des moyens qui, déclenchés par le remplacement de la carte SIM (2, 3), produisent automatiquement un message (13) qui présente au moins :
- le second numéro d'appel (14) attribué à la seconde carte SIM (3), et
- au moins une information (15) qui identifie la carte SIM (2) remplacée,
- des moyens qui, après le remplacement de la carte SIM (2, 3), envoient le message (13) depuis le terminal de téléphonie mobile (1) vers un numéro d'appel défini qui est attribué à une passerelle de téléphonie mobile (4).
